# EUROPEAN PATENT SPECIFICATION

(11) **EP 2 631 055 B1**
(45) Date of publication and mention of the grant of the patent: **04.05.2016**
(21) Application number: 12425038.2
(22) Date of filing: 27.02.2012
(51) Int. Cl.: B29C 39/20, B29L 9/00, B29K 105/04, B29K 75/00, B29L 7/00, B05C 5/02, B29C 39/18, B29C 44/32, B29C 47/16, B29C 67/24, B32B 5/20, B32B 27/40, E04B 1/62, B32B 37/00, B29C 44/46, B32B 27/06

(54) **Device and process for distributing reactive mixes in continuous technological processes, particularly for the production of thermally insulating panels**
Vorrichtung und Verfahren zum Verteilen reaktiver Mischungen in kontinuierlichen technologischen Prozessen, insbesondere zur Herstellung von wärmeisolierenden Paneelen
Dispositif et procédé pour distribuer des mélanges réactifs dans un processus technologique continu, en particulier pour la production de panneaux d'isolation thermique

(43) Date of publication of application: 28.08.2013
(73) Proprietor: IMPIANTI OMS S.p.A., I-20843 Verano Brianza (Prov. of Milano) (IT)
(72) Inventor: Massarotto, Loris, 20844 Triuggio (IT)
(74) Representative: Modiano, Micaela Nadia

(56) References cited:
- EP-A1- 1 518 654
- EP-A1- 2 221 160
- DE-A1- 2 726 360
- DE-A1- 4 225 618
- DE-A1- 19 853 117
- FR-A- 1 449 836
- GB-A- 1 282 876
- GB-A- 2 332 640
- JP-A- 52 152 457
- JP-A- 2005 169 699
- US-A- 3 174 887
- US-A- 3 181 199
- US-A- 3 193 406
- US-A- 3 231 439
- US-A- 3 419 934

## Description

The present invention relates to a device for distributing reactive mixes in continuous technological processes, particularly for the production of thermally insulating panels, and to an apparatus for the production of thermally insulating panels provided by means of continuous technological processes which comprises such distribution device.

In the production of thermally insulating panels made of expanded polyurethane or with the polyisocyanurate variant for better fire resistance, intended for fields of application of thermal insulation (such as in the building sector, in industrial and civil refrigeration, etc.), the reactive mix distribution technique has a process aspect of primary importance in order to ensure constant panel density, which is required in order to achieve a low heat conductivity value and accordingly an optimum thermal insulation.

This reactive mix is generally composed of several chemical components (such as polyols, isocyanate, catalysts, silicone, water, expansion agents, et cetera), which are required for the formation of expanded polyurethane and in particular of the low-density rigid type.

Such components are mixed by adapted mixing heads, generally with a high-pressure principle, and then the formed reactive mix is deposited, by means of an adapted distribution device, on the lower flexible substrate (paper, feltpaper, embossed aluminum, kraft paper, et cetera) or rigid substrate (carbon steel, aluminum, wood, et cetera) which defines part of the insulating panel.

This distribution device, which works in a part of the continuous apparatus termed pouring deck, must be such as to ensure a deposition of the reactive mix with a laminar motion in the liquid state and for the entire width of the flexible or rigid substrate, so as to obtain a final panel that has no voids and with a uniform density distribution.

In the background art, the solutions adopted for this reactive mix distribution technique are several.

Among them, one of the most widespread consists in using a high-pressure mixing head with the application of a distributor made of plastic material or metal at the end of the head. This technique leads to a maximum production rate comprised between 15 and 20 meters per minute.

More precisely, in this technique the mixing head can be fixed and positioned at the center with a distribution device applied thereto transversely to the pouring deck.

In this case, the distribution device can be an apparatus constituted by a plurality of tubes of a certain diameter, such as to maintain, as a function of the flow-rate of the reactive mix, a given speed of the reactive mix in order to avoid possible stagnations over time. The final portion is always a tube which is provided appropriately with mutually equidistant holes from which the reactive mix exits.

As an alternative, a mechanical device is applied which is capable of dividing the reactive mix that exits from the mixing head at high pressure into multiple streams. The streams are conveyed by means of three or more ducts having a circular cross-section on the flexible or rigid substrate placed on the pouring deck.

In another embodiment, this technique can provide for the mixing head to be moved automatically transversely to the pouring deck, with the possibility to apply a cylindrical distribution device having a length comprised between 300 and 350 millimeters and provided with small equidistant holes for the outflow of the reactive mix or a nozzle-like distribution device, which, by means of a dispersion vehicle, usually dry air or nitrogen, nebulizes/atomizes the reactive mix, forming a "spray" having a generally triangular geometric shape which strikes the lower flexible or rigid substrate.

This solution of a known type that has just been described is not devoid of drawbacks and functional process limitations, which include the fact that with a single mixing head and corresponding distribution apparatus the deposition of the reactive mix does not occur uniformly.

In particular, with the moved mixing head, the quantity of reactive mix is greater at the two ends where the change of direction occurs and in some case clogs in a short time the distribution holes related to the outflow of the reactive mix.

Another solution, which is very widespread for this reactive mix distribution technique, consists in using three high-pressure mixing heads with the application of distributors made of plastic material or metal for each individual head. This technique leads to a maximum production rate comprised between 20 and 60 meters per minute and in some cases even higher.

In this case, only the manual or semiautomatic positioning of the three mixing heads on the pouring deck and the corresponding flexible or rigid substrate is provided.

As a function of the flow-rate of the reactive mix, and of the reactive mix proper, two or three distribution tubes, generally having a circular cross-section, made of plastic material or metal, are applied for each individual mixing head.

Such tubes are capable of dividing the flow of the reactive mix into multiple flows with laminar motion on the flexible or rigid substrate.

In this case also, this solution of the known type described above is not devoid of drawbacks and functional process limitations, which include the fact that with three mixing heads and corresponding distribution apparatuses the merging of the several flows of the reactive mix generated by the distributors applied to the mixing heads often entails the undesirable inclusion of the air that is present in the upper portion of the final panel, as well as vertical lines which are visible in the thickness of the thermally insulating panel.

This structural defect is equivalent to high density as a consequence of the joining and corresponding packing of the flows of the reactive mixes, with consequent worsening of the insulating power.

In general, the several distribution devices of the known type applied to mixing heads do not allow immediate functionality/efficiency except with the drawback of countless operating experiences and consequent adjustments of the several physical-chemical parameters of the production process of the panels.

Examples of devices for distributing reacting mixes through distribution slots are available, for example, from documents GB 1 282 876, DE 27 26 360, DE 198 53 117, EP 2 221 160, DE 42 25 618, JP 52 152457 and US 3 181 199.

The aim of the present invention is to provide a reactive mix distribution device and an apparatus for the production of thermally insulating panels that solve the drawbacks and overcome the described limitations.

Within this aim, an object of the present invention is to provide a distribution device that is capable of depositing a reactive mix in a manner which is uniform and constant over time.

Another object of the present invention is to provide a distribution device and an apparatus for the production of thermally insulating panels that can be adjusted easily, so that they can be adapted to the change of format of the panel in terms of thickness and of chemical-physical characteristics of the components.

A further object of the present invention is to provide a distribution device and an apparatus for the production of thermally insulating panels that are structurally simple, easy to manufacture and have low costs.

This aim, as well as these and other objects which will become better apparent hereinafter, are achieved by a device according to the present invention, that has the features set forth in claim 1.

Moreover, this aim, as well as these and other objects which will become better apparent hereinafter, are achieved by an apparatus for the production of thermally insulating panels provided by means of continuous technological processes, comprising a main frame which defines a pouring deck on which a lower substrate is applied, a distribution beam which is associated with said main frame transversely to the longitudinal extension of said lower flexible substrate so as to be spaced from said pouring deck, said distribution beam supporting at least one mixing head which is connected functionally to a plurality of tanks which contain liquid components of a reactive mix and being functionally connected to a distribution device which is arranged above said pouring deck for the uniform distribution of said reactive mix on said lower substrate.

Further characteristics and advantages of the present invention will become apparent from the description of a preferred but not exclusive embodiment of an apparatus for the production of thermally insulating panels provided by means of continuous technological processes, and of a device for distributing reactive mixes in continuous technological processes, particularly for the production of thermally insulating panels, according to the invention, illustrated by way of non-limiting example in the accompanying drawings, wherein:

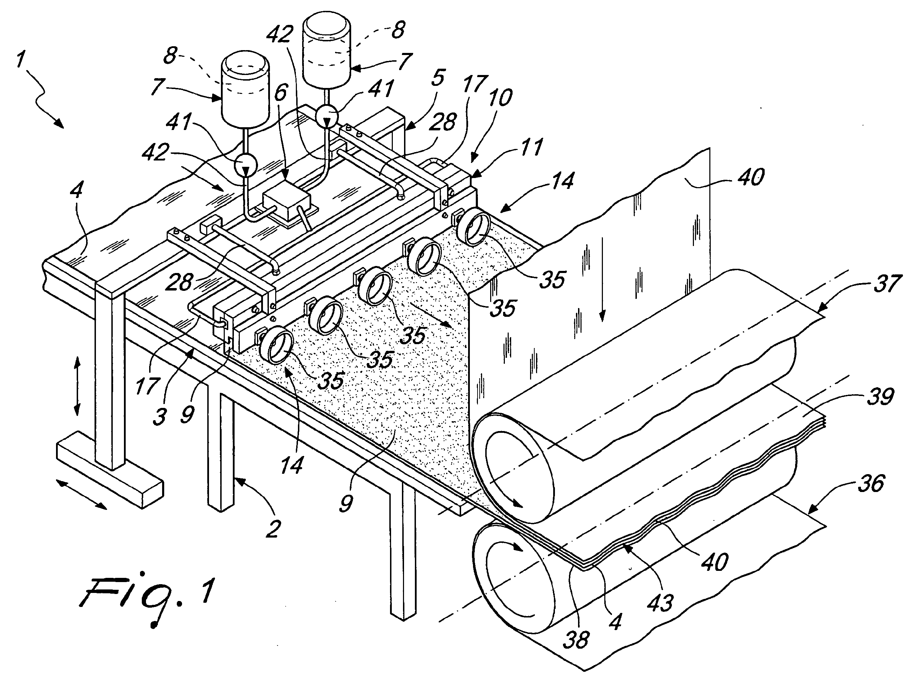

Figure 1 is a schematic perspective view of an apparatus for the production of thermally insulating panels provided by means of continuous technological processes, according to the invention;

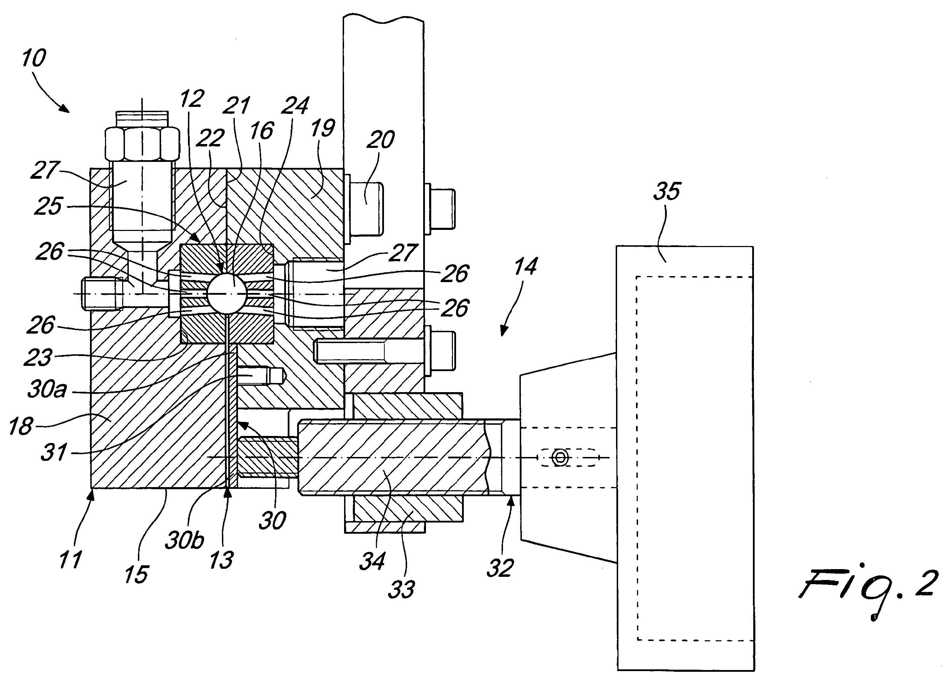

Figure 2 is a transverse sectional view of the distribution device according to the invention used in the apparatus shown in Figure 1.

With reference to the figures, the apparatus for the production of thermally insulating panels provided by means of continuous technological processes, generally designated by the reference numeral 1, comprises a main frame 2 which defines a pouring deck 3 on which a lower (flexible or rigid) substrate 4 is spread, a distribution beam 5 which is associated with the main frame 2 transversely to the longitudinal extension of the flexible or rigid lower substrate 4 so as to be spaced from the pouring deck 3.

More precisely, the distribution beam 5 supports at least one mixing head 6, which is connected functionally to a plurality of tanks 7 which contain liquid components 8, such as for example methylene diphenyl diisocyanate or commonly known as polymeric MDI and polyols with various additives, of a reactive mix 9, such as for example of the low-density rigid polyurethane type.

A plurality of high-pressure pumps 41 is also provided, one for each tank 7, which are connected to the mixing head 6 by means of flexible ducts 42 made of plastic material or metal for feeding the mixing head 6 with the liquid components 8 according to the required flow-rate and stoichiometric ratio.

The mixing head 6, further, is functionally connected to a device 10 for distributing reactive mixes in continuous technological processes, particularly for the production of thermally insulating panels, which is arranged above the pouring deck 3 for the uniform distribution of the reactive mix 9 on the flexible or rigid lower substrate 4 at right angles to the pouring deck 3.

The distribution device 10 comprises an elongated body 11, which can be arranged above and transversely to the pouring deck 3 and is provided with an inner channel system 12 which is connected to the mixing head 6.

According to the invention, the distribution device 10 comprises a longitudinal slot 13 whose width can be adjusted by way of first adjustment means 14 and which is connected to the inner channel system 12 and defined on the lower face 15 of the elongated body 11 directed toward the pouring deck 3 for the uniform, controlled and adjustable distribution of the reactive mix 9 on the flexible or rigid lower substrate 4.

In greater detail, the inner channel system 12 comprises an intake channel 16 which crosses longitudinally the elongated body 11 and is connected, at its ends, to the mixing head 6 by means of first ducts 17 which can be made of plastic material or metal.

Conveniently, the intake channel 16 is connected for most of its length to the longitudinal slot 13 for the outflow, through the longitudinal slot 13, of the reactive mix 9 that flows in the intake channel 16.

As regards the elongated body 11, it is defined by two outer metallic plates 18 and 19, which are elongated along a preferred direction, substantially have the shape of a parallelepiped with a rectangular base, can be mutually associated by way of screw means 20 and define, at their mutually facing faces 21 and 22, two longitudinal slots 23 and 24 for defining a receptacle for a feeder bar 25 which defines internally the intake channel 16.

More precisely, the feeder bar 25 is provided by two bar portions which are arranged, respectively, in the longitudinal slots 23 and 24.

Two separation sheets, not shown, made for example of polyethylene, are interposed between the mutually facing faces 21 and 22 of the two outer metallic plates 18 and 19 that define the longitudinal slot 13 and are positioned before the first two outer metallic plates 18 and 19 are fixed to each other, so that when the reactive mix 9 is circulated it does not stick to the outer metallic plates 18 and 19, blocking neither the intake channel 16, nor the longitudinal slot 13.

To prevent the separation sheets from blocking in some way the passage of the reactive mix 9 in the inner channel system 12, the channel system 12 comprises a plurality of ducts 26 which extend radially from the intake channel 16 and are connected thereto and to a main channel 27 in which a partial vacuum is generated for the perfect adhesion of the separation sheets to the feeder bar 25, which is composed of two bar portions which define the intake channel 16.

More precisely, the main channel 27 is connected by means of second ducts 28, made of plastic material or metal, to a partial vacuum unit, which is not shown.

In this manner, the flowability of the reactive mix 9 is improved, with tangible results in terms of time, maintenance/cleaning and consequent final economic aspects.

Advantageously, the first adjustment means 14 comprise a metallic lamina 30, which has a thickness comprised between 1.5 millimeters and 30 millimeters with a width that is substantially equal to, or comprised between, two and four times the inside diameter of the intake channel 16 and is extended for a length that is substantially equal to the useful width of the flexible or rigid lower substrate 4.

The metallic lamina 30 is fixed, by way of other screw means 31, at an inner longitudinal edge 30a thereof, to an outer metallic plate 19, on the face 21 at the longitudinal slot 13.

The other longitudinal edge 30b of the metallic lamina 30 is instead free to flex elastically under the action of a series of micrometric actuators 32 with which the metallic lamina 30 is associated.

The micrometric actuators 32 are arranged along the elongated body 11 at regular intervals, comprised for example between 50 and 100 millimeters, and are adapted to deform elastically the metallic lamina 30 in order to vary the width of the longitudinal slot 13 from a maximum which is substantially equal to 2 millimeters to a minimum which is substantially equal to 0 millimeters, so as to block completely the flow of reactive mix 9 that exits from the distribution device 10.

In this manner it is possible to adjust on the order of hundredths of a millimeter the thickness of the blade of reactive mix 9 that exits from the longitudinal slot 13.

In the proposed embodiment, the micrometric actuators 32 are of the mechanical type and each one comprises a female thread 33, which is integral with the elongated body 11, and a worm screw 34, which engages in the female thread 33 with its ends respectively associated with the metallic lamina 30 and with an adjustment handwheel 35, which is provided with a position indication instrument, not shown.

The micrometric actuators 32 are thus moved manually, but they can also be moved automatically by means of electropneumatic or electromechanical servo controls.

Going back to the apparatus 1, it comprises, in addition to what has already been described, two conveyor belts 36 and 37 which are arranged downstream of the pouring deck 3 and are adapted to contain the reactive mix 9 during growth.

In greater detail, the conveyor belts 36 and 37, which are mutually opposite parallel to the pouring deck 3 with their direction of advancement which matches the direction of advancement of the flexible or rigid lower substrate 4, comprise a lower conveyor belt 36, which defines a lower advancement surface 38 of the lower flexible substrate 4 which is substantially coplanar to the pouring deck 3, and the upper conveyor belt 37, which defines an upper advancement surface 39 of a flexible or rigid upper substrate 40.

Conveniently, the upper advancement surface 39, which is substantially parallel to the lower advancement surface 38, is arranged at a distance from the lower advancement surface 38 that is equal to the final thickness of the thermally insulating panel 43 being manufactured.

In order to be able to adapt the apparatus 1 to every change of format of the panel, in terms of thickness and of chemical-physical characteristics of the components, second means are provided, not described in detail, for adjusting at least one among: the height of the distribution beam 5 with respect to the pouring deck 3, the longitudinal position of the distribution beam 5 along the pouring deck 3, and the distance between the upper advancement surface 39 and the lower advancement surface 38.

Operation of the apparatus 1 and of the distribution device 10 is clear and evident from what has been described so far.

In particular, it is important to point out that it is possible to adjust the deposition of the reactive mix 9 at any time of the production cycle, being able to act both on the thickness of the longitudinal slot 13 and on the position, in terms of vertical distance and longitudinal positioning, so as to obtain a calibrated deposition of the reactive mix 9.

In practice it has been found that the device for distributing reactive mixes in continuous technological processes, particularly for the production of thermally insulating panels, and the apparatus for the production of thermally insulating panels provided with continuous technological processes, according to the invention, achieve the intended aim and objects, since they make it possible to achieve a deposition of the reactive mix in a manner which is uniform and constant over time, with work flow rates that can vary from 100 to 2000 grams per second.

Another advantage of the distribution device according to the present invention resides in that it can be also used in existing apparatuses without substantial modifications thereof for installation.

The distribution device and the apparatus according to the present invention thus conceived are susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (10) for distributing reactive mixes in continuous technological processes, particularly for the production of thermally insulating panels, comprising: an elongated body (11) which can be arranged above and transversely to a pouring deck (3) of an apparatus (1) for the production of thermally insulating panels, said elongated body (11) being defined by two outer, mutually associatable metallic plates (18, 19) which are elongated along a preferred direction and provided with an inner channel system (12) which is connected to at least one mixing head (6) of said apparatus (1) for mixing a reactive mix (9); and a longitudinal slot (13) whose width can be adjusted by way of first adjustment means (14) and which is connected to said inner channel system (12) and defined on the lower face (15) of said elongated body (11) that is directed toward said pouring deck (3) for the uniform, controlled and adjustable distribution of said reactive mix (9) on a lower substrate (4) arranged on said pouring deck (3), said inner channel system (12) comprising an intake channel (16) which passes longitudinally through said elongated body (11),
**characterized in that**
said intake channel (16) is connected, at its ends, to said at least one mixing head (6) by means of first ducts (17) and, for most of its length to said longitudinal slot (13) for the exit, through said longitudinal slot (13), of said reactive mix (9) which flows in said intake channel (16),
**and in that**
said metallic plates (18, 19) define, at their mutually facing faces (21, 22), two longitudinal slots (23, 24) that define a receptacle for a feeder bar (25) which is composed of two bar portions arranged, respectively, in said longitudinal slots (23, 24) so as to define thereinside said intake channel (16), between said mutually facing faces (21, 22) of said metallic plates (18, 19) being interposed two separation sheets and being defined said longitudinal slot (13).

2. The distribution device (10) according to claim 1, **characterized in that** said inner channel (12) comprises a plurality of ducts (26) which extend radially from said intake channel (16) in said feeder bar (25) and are connected to said intake channel (16) and to a main channel (27) in which a partial vacuum is generated for the perfect adhesion of said separation sheets to said bar portions of the feeder bar (25) in order to prevent the blocking of the intake channel (16) and of the longitudinal slot (13) during the passage of the reactive mix (9).

3. The distribution device (10) according to claim 1 or 2, **characterized in that** said first adjustment means (14) comprise a metallic lamina (30) which is extended for a length which is substantially equal to the useful width of said lower substrate (4), is fixed at an inner longitudinal edge thereof (30a) to one of said outer metallic plates (19) on one of said mutually facing faces (21) and at said longitudinal slot (13), the other longitudinal edge (30b) of said metallic lamina (30) being associated with a series of micrometric actuators (32) which are arranged along said elongated body (11) and are adapted to deform elastically said metallic lamina (30) in order to vary the width of said longitudinal slot (13) from a maximum that is substantially equal to 2 millimeters to a minimum which is substantially equal to 0 millimeters.

4. The distribution device (10) according to claim 3, **characterized in that** said metallic lamina (30) has a thickness comprised between 1.5 and 30 millimeter, with a width which is substantially equal to, or comprised between, two and four times the inside diameter of said intake channel (16).

5. The distribution device (10) according to claims 3 or 4, **characterized in that** said micrometric actuators (32) are of the mechanical type and each one comprises a female thread (33) which is integral with said elongated body (11) and a worm screw (34) which engages said female thread (33) with its ends respectively associated with said metallic lamina (30) and with an adjustment handwheel (35) which is provided with a position indicating instrument.

6. An apparatus (1) for providing thermally insulating panels provided by means of continuous technological processes, comprising: a main frame (2) which defines a pouring deck (3) on which a lower substrate (4) is applied, and a distribution beam (5) which is associated with said main frame (2) transversely to the longitudinal extension of said lower substrate (4) so as to be spaced from said pouring deck (3), said distribution beam (5) supporting at least one mixing head (6), which is functionally connected to a plurality of tanks (7) which contain liquid components (8) of a reactive mix (9), **characterized in that** said at least one mixing head (6) is functionally connected to a distribution device (10), according to one or more of the preceding claims, arranged above said pouring deck (3) for the uniform distribution of said reactive mix (9) on said lower substrate (4).

7. The apparatus (1) according to claim 6, **characterized in that** it comprises two conveyor belts (36, 37) which are arranged downstream of said pouring deck (3) and are adapted to contain said reactive mix (9) during growth, said conveyor belts (36, 37) being mutually opposite parallel to said pouring deck (3) so that their advancement direction matches the advancement direction of said lower substrate (4).

8. The apparatus (1) according to claim 7, **characterized in that** said conveyor belts (36, 37) comprise a lower conveyor belt (36) which defines a lower advancement surface (38) for said lower substrate (4) which is substantially coplanar to said pouring deck (3) and an upper conveyor belt (37) which defines an upper advancement surface (39) of an upper substrate (40), said upper advancement surface (39) being arranged at a distance from said lower advancement surface (38) that is equal to the final thickness of the thermally insulated panel (43) being manufactured and being substantially parallel to said lower advancement surface (38).

9. The apparatus (1) according to claim 8, **characterized in that** it comprises second means for the adjustment of at least one among: the height of said distribution beam (5) with respect to said pouring deck (3), the longitudinal position of said distribution beam (5) along said pouring deck (3), and the distance between said upper advancement surface (39) and said lower advancement surface (38).

10. The apparatus (1) according to one or more of claims 6-9, **characterized in that** it comprises a plurality of high-pressure pumps (41), one for each one of said tanks (7), which are connected to said at least one mixing head (6) to feed it with said liquid components (8) according to the required flow-rate and stoichiometric ratio.

11. A continuous technological process, particularly for the production of thermally insulating panels, **characterized in that** it is carried out with an apparatus (1) according to any of the claims 6-9, the process providing, through the longitudinal slot (13) of a distribution device (10) according to any of the claims 1-5 and functionally connected to at least one mixing head (6) of the apparatus (1), a deposition of an adhesive mix (9) on a lower substrate (4) in a uniform manner and constant over time with flow rates of the adhesive mix (9) that can vary from 100 to 2000 grams per second.

## Patentansprüche

1. Vorrichtung (10) zum Verteilen reaktiver Mischungen in kontinuierlichen technologischen Prozessen, insbesondere zur Herstellung wärmedämmender Platten, umfassend: einen länglichen Körper (11), der über und quer zu einem Gießdeck (3) einer Einrichtung (1) zur Herstellung von wärmedämmenden Platten angeordnet werden kann, wobei der längliche Körper (11) von zwei äußeren miteinander verbindbaren Metallplatten (18, 19) definiert ist, die längs einer bevorzugten Richtung langgestreckt und mit einem inneren Kanalsystem (12) versehen sind, das mit mindestens einem Mischkopf (6) der Einrichtung (1) zwecks Mischen einer reaktiven Mischung (9) verbunden ist; und einen Längsschlitz (13), dessen Breite mit Hilfe von ersten Einstellmitteln (14) eingestellt werden kann und der mit dem inneren Kanalsystem (12) verbunden ist und auf der unteren Seite (15) des langgestreckten Körpers (11) definiert ist, die in Richtung des Gießdecks (3) zwecks der gleichmäßigen, gesteuerten und einstellbaren Verteilung der reaktiven Mischung (9) auf ein unteres Substrat (4) gerichtet ist, das auf dem Gießdeck (3) angeordnet ist, wobei das innere Kanalsystem (12) einen Einlasskanal (16) umfasst, der längs durch den langgestreckten Körper (11) hindurchgeht,
**dadurch gekennzeichnet, dass**
der Einlasskanal (16) an seinen Enden mit dem mindestens einen Mischkopf (6) mittels erster Leitungen (17) und über den größten Teil seiner Länge mit dem Längsschlitz (13) für den Austritt der in dem Einlasskanal (16) fließenden reaktiven Mischung (9) durch den Längsschlitz (13) verbunden ist,
und dass
die Metallplatten (18, 19) an ihren einander gegenüberliegenden Flächen (21, 22) zwei Längsschlitze (23, 24) definieren, die eine Aufnahme für eine Zuführschiene (25) definieren, die aus zwei Schienenabschnitten besteht, die jeweils in den Längsschlitzen (23, 24) angeordnet sind, um darin den Einlasskanal (16) zu definieren, wobei zwischen den einander gegenüberliegenden Flächen (21, 22) der Metallplatten (18, 19) zwei Trennfolien angeordnet sind und der Längsschlitz (13) definiert ist.

2. Verteilungsvorrichtung (10) nach Anspruch 1, **dadurch gekennzeichnet, dass** der innere Kanal (12) eine Vielzahl von Leitungen (26) umfasst, die sich radial von dem Einlasskanal (16) in der Zuführschiene (25) erstrecken und mit dem Einlasskanal (16) und mit einem Hauptkanal (27) verbunden sind, in dem ein Teilvakuum zwecks perfekter Haftung der Trennfolien an den Schienenabschnitten der Zuführschiene (25) erzeugt wird, um das Blockieren des Einlasskanals (16) und des Längsschlitzes (13) während des Durchtritts der reaktiven Mischung (9) zu verhindern.

3. Verteilungsvorrichtung (10) nach Anspruch 1 oder 2, **dadurch gekennzeichnet, dass** die ersten Einstellmittel (14) eine Metalllamelle (30) umfassen, die sich über eine Länge erstreckt, die im Wesentlichen gleich der Nutzbreite des unteren Substrats (4) ist, die an ihrer inneren Längskante (30a) an einer der äußeren Metallplatten (19) an einer der einander gegenüberliegenden Flächen (21) und an dem Längsschlitz (13) befestigt ist, wobei die andere Längskante (30b) der Metalllamelle (30) mit einer Reihe von mikrometrischen Aktoren (32) in Verbindung steht, die längs des langgestreckten Körpers (11) angeordnet und geeignet sind, die Metalllamelle (30) elastisch zu verformen, um die Breite des Längsschlitzes (13) von einem Maximum, das im Wesentlichen gleich 2 Millimeter ist, auf ein Minimum, das im Wesentlichen gleich 0 Millimeter ist, zu verändern.

4. Verteilungsvorrichtung (10) nach Anspruch 3, **dadurch gekennzeichnet, dass** die Metalllamelle (30) eine Dicke hat, die zwischen 1,5 und 30 Millimeter beträgt, mit einer Breite, die im Wesentlichen gleich dem Innendurchmesser des Einlasskanals (16) oder zwischen dem zwei-und vierfachen dieses Innendurchmessers liegt.

5. Verteilungsvorrichtung (10) nach Anspruch 3 oder 4, **dadurch gekennzeichnet, dass** die mikrometrischen Aktoren (32) mechanischer Art sind und jeweils ein Innengewinde (33) umfassen, das in dem langgestreckten Körper (11) integriert ist, sowie eine Schneckenschraube (34), die mit dem Innengewinde (33) in Eingriff kommt, während ihre Enden mit der Metalllamelle (30) bzw. mit einem Einstellhandrad (35) verbunden sind, das mit einem Positionsanzeigeinstrument versehen ist.

6. Einrichtung (1) zum Vorsehen wärmedämmender Platten, die mit Hilfe von kontinuierlichen technologischen Prozessen vorgesehen werden, umfassend: einen Hauptrahmen (2), der ein Gießdeck (3) definiert, auf dem ein unteres Substrat (4) aufgebracht ist, und einen Verteilungsbalken (5), der mit dem Hauptrahmen (2) quer zur Längserstreckung des unteren Substrats (4) verbunden ist, um von dem Gießdeck (3) beabstandet zu sein, wobei der Verteilungsbalken (5) mindestens einen Mischkopf (6) trägt, der funktional mit einer Vielzahl von Behältern (7) verbunden ist, die flüssige Komponenten (8) einer reaktiven Mischung (9) enthalten, **dadurch gekennzeichnet, dass** der mindestens eine Mischkopf (6) funktional mit einer Verteilungsvorrichtung (10) gemäß einem oder mehreren der vorhergehenden Ansprüche verbunden ist, die über dem Gießdeck (3) zwecks gleichmäßiger Verteilung der reaktiven Mischung (9) auf das untere Substrat (4) angeordnet ist.

7. Einrichtung (1) nach Anspruch 6, **dadurch gekennzeichnet, dass** es zwei Förderbänder (36, 37) umfasst, die stromabwärts des Gießdecks (3) angeordnet und geeignet sind, die reaktive Mischung (9) während des Wachstums zu enthalten, wobei die Förderbänder (36, 37) einander gegenüberliegend parallel zu dem Gießdeck (3) sind, so dass ihre Vorschubrichtung mit der Vorschubrichtung des unteren Substrats (4) übereinstimmt.

8. Einrichtung (1) nach Anspruch 7, **dadurch gekennzeichnet, dass** die Förderbänder (36, 37) ein unteres Förderband (36) umfassen, das eine untere Vorschubfläche (38) für das untere Substrat (4) definiert, das im Wesentlichen koplanar zu dem Gießdeck (3) ist, sowie ein oberes Förderband (37), das eine obere Vorschubfläche (39) eines oberen Substrats (40) definiert, wobei die obere Vorschubfläche (39) in einem Abstand von der unteren Vorschubfläche (38) angeordnet ist, der gleich der endgültigen Dicke der wärmedämmenden Platte (43) ist, die hergestellt wird, und im Wesentlichen parallel zu der unteren Vorschubfläche (38) ist.

9. Einrichtung (1) nach Anspruch 8, **dadurch gekennzeichnet, dass** sie zweite Mittel zum Einstellen mindestens einer Größe unter den folgenden umfasst: die Höhe des Verteilungsbalkens (5) in Bezug auf das Gießdeck (3), die Längsposition des Verteilungsbalkens (5) längs des Gießdecks (3) und der Abstand zwischen der oberen Vorschubfläche (39) und der unteren Vorschubfläche (38).

10. Einrichtung (1) nach einem oder mehreren der Ansprüche 6-9, **dadurch gekennzeichnet, dass** sie eine Vielzahl von Hochdruckpumpen (41) umfasst, eine für jeden Behälter (7), die mit dem mindestens einen Mischkopf (6) verbunden sind, um ihn mit den flüssigen Komponenten (8) entsprechend der erforderlichen Fließrate und dem stöchiometrischen Mischungsverhältnis zu speisen.

11. Kontinuierlicher, technologischer Prozess, insbesondere für die Herstellung wärmedämmender Platten, **dadurch gekennzeichnet, dass** er mit einer Einrichtung (1) nach einem der Ansprüche 6-9 durchgeführt wird, wobei der Prozess durch den Längsschlitz (13) einer Verteilungsvorrichtung (10) nach einem der Ansprüche 1-5, die funktional mit mindestens einem Mischkopf (6) der Einrichtung (1) verbunden ist, ein Aufbringen einer haftenden Mischung (9) auf einem unteren Substrat (4) auf gleichmäßige Weise und konstant über die Zeit mit Fließraten der haftenden Mischung (9) vorsieht, die von 100 bis 2000 Gramm pro Sekunde variieren können.

## Revendications

1. Dispositif (10) pour distribuer des mélanges réactifs dans des procédés technologiques continus, en particulier pour la fabrication de panneaux d'isolation thermique, comportant :
un corps allongé (11) qui peut être disposé au-dessus et transversalement par rapport à un plateau de déversement (3) d'un appareil (1) pour la fabrication de panneaux d'isolation thermique, ledit corps allongé (11) étant défini par deux plaques métalliques extérieures (18, 19) pouvant être associées l'une à l'autre, lesquelles sont allongées dans une direction préférée et sont pourvues d'un système de canal intérieur (12) qui est relié à au moins une tête de mélange (6) dudit appareil (1) pour mélanger un mélange réactif (9) ;
et une fente longitudinale (13) dont la largeur peut être réglée à l'aide de premiers moyens de réglage (14) et qui est reliée audit système de canal intérieur (12) et définie sur la face inférieure (15) dudit corps allongé (11) qui est orientée vers ledit plateau de déversement (3) pour réaliser une distribution uniforme, maîtrisée et réglable dudit mélange réactif (9) sur un substrat inférieur (4) disposé sur le plateau de déversement (3), ledit système de canal intérieur (12) comprenant un canal d'amenée (16) qui passe longitudinalement à travers ledit corps allongé (11),
**caractérisé en ce que**
ledit canal d'amenée (16) est relié, à ses extrémités, à ladite au moins une tête de mélange à l'aide de premiers conduits (17) et, sur la majeure partie de sa longueur, à ladite fente longitudinale (13) pour la sortie, par ladite fente longitudinale (13), dudit mélange réactif(9) qui s'écoule dans ledit canal d'amenée (16),
**et en ce que**
lesdites plaques métalliques (18, 19) définissent, sur leurs faces mutuellement en regard (21, 22), deux fentes longitudinales (23, 24) qui définissent un logement pour une barre d'alimentation (25) composée de deux parties de barre respectivement disposées dans lesdites fentes longitudinales (23, 24) de manière à définir à l'intérieur de celles-ci ledit canal d'amenée (16), entre lesdites faces (21, 22) mutuellement en regard desdites plaques métalliques (18, 19) étant intercalées deux tôles de séparation et étant définie ladite fente longitudinale (13).

2. Dispositif de distribution (10) selon la revendication 1, **caractérisé en ce que** ledit canal intérieur (12) comprend une pluralité de conduits (26) qui s'étendent radialement depuis ledit canal d'amenée (16) dans ladite barre d'alimentation (25) et sont reliés audit canal d'amenée (16) et à un canal principal (27) dans lequel un vide partiel est créé pour que lesdites tôles de séparation adhèrent parfaitement auxdites parties de barre de la barre d'alimentation (25) afin d'empêcher l'obstruction du canal d'amenée (16) et de la fente longitudinale (13) pendant le passage du mélange réactif (9).

3. Dispositif de distribution (10) selon la revendication 1 ou 2, **caractérisé en ce que** lesdits premiers moyens de réglage (14) comprennent une lame métallique (30) qui s'étend sur une longueur sensiblement égale à la largeur utile dudit substrat inférieur (4), est fixée sur un bord longitudinal intérieur (30a) de celle-ci à l'une desdites plaques métalliques extérieures (19) sur l'une desdites faces (21) mutuellement en regard et à ladite fente longitudinale (13), l'autre bord longitudinal (30b) de ladite lame métallique (30) étant associé à une série de vérins micrométriques (32) qui sont disposés le long dudit corps allongé (11) et sont conçus pour déformer élastiquement ladite lame métallique (30) afin de modifier la largeur de ladite fente longitudinale (13) entre un maximum sensiblement égal à 2 millimètres et un minimum sensiblement égal à 0 millimètre.

4. Dispositif de distribution (10) selon la revendication 3, **caractérisé en ce que** ladite lame métallique (30) a une épaisseur de 1,5 à 30 millimètres, sa largeur étant sensiblement égale, ou intermédiaire entre, deux et quatre fois le diamètre intérieur dudit canal d'amenée (16).

5. Dispositif de distribution (10) selon la revendication 3 ou 4, **caractérisé en ce que** lesdits vérins micrométriques (32) sont du type mécanique et comprennent chacun un filetage femelle (33) réalisé d'une seule pièce avec ledit corps allongé (11) et une vis sans fin (34) qui s'engage dans ledit filetage femelle (33), ses extrémités étant respectivement associées à ladite lame métallique (30) et à un volant de réglage (35) qui est muni d'un instrument indiquant une position.

6. Appareil (1) pour fabriquer des panneaux d'isolation thermique réalisés à l'aide de procédés technologiques continus, comportant : un bâti principal (2) qui définit un plateau de déversement (3) sur lequel un substrat inférieur (4) est appliqué, et un collecteur de distribution (5) associé audit bâti principal (2) transversalement par rapport à l'extension longitudinale dudit substrat inférieur (4) de manière à être espacé dudit plateau de déversement (3), ledit collecteur de distribution (5) supportant au moins une tête de mélange (6), laquelle coopère avec une pluralité de cuves (7) qui contiennent des constituants liquides (8) d'un mélange réactif (9), **caractérisé en ce que** ladite au moins une tête de mélange (6) est reliée fonctionnement avec un dispositif de distribution (10) selon une ou plusieurs des revendications précédentes, disposé au-dessus dudit plateau de déversement (3) pour distribuer uniformément ledit mélange réactif (9) sur ledit substrat inférieur (4).

7. Appareil (1) selon la revendication 6, **caractérisé en ce qu'**il comporte deux tapis roulants (36, 37) qui sont disposés en aval dudit plateau de déversement (3) et sont conçus pour contenir ledit mélange réactif (9) pendant son expansion, lesdits tapis roulants (36, 37) se faisant face parallèlement audit plateau de déversement (3) de façon que leur sens de défilement concorde avec le sens de défilement dudit substrat inférieur (4).

8. Appareil (1) selon la revendication 7, **caractérisé en ce que** lesdits tapis roulants (36, 37) comprennent un tapis roulant inférieur (36) qui définit une surface inférieure de défilement (38) pour ledit substrat inférieur (4) qui est sensiblement dans le même plan que ledit plateau de coulée (3) et un tapis roulant supérieur (37) qui définit une surface supérieure de défilement (39) d'un substrat supérieur (40), ladite surface supérieure de défilement (39) étant séparée de ladite surface inférieure de défilement (38) par une distance égale à l'épaisseur finale du panneau (43) d'isolation thermique en cours de fabrication et étant sensiblement parallèle à ladite surface inférieure de défilement (38).

9. Appareil (1) selon la revendication 8, **caractérisé en ce qu'**il comporte un second moyen pour régler au moins une valeur parmi : la hauteur dudit collecteur de distribution (5) par rapport audit plateau de coulée (3), la position longitudinale dudit collecteur de distribution (5) le long dudit plateau de déversement (3), et la distance entre ladite surface supérieure de défilement (39) et ladite surface inférieure de défilement (38).

10. Appareil (1) selon une ou plusieurs des revendications 6 à 9, **caractérisé en ce qu'**il comporte une pluralité de pompes à haute pression (41), une pour chacune desdites cuves (7), qui sont reliées à ladite au moins une tête de mélange (6) pour lui fournir lesdits constituants liquides (8) en fonction du débit et du rapport stoechiométrique voulus.

11. Procédé technologique continu, en particulier pour la fabrication de panneaux d'isolation thermique, **caractérisé en ce qu'**il est exécuté avec un appareil (1) selon l'une quelconque des revendications 6 à 9, le procédé réalisant, par l'intermédiaire de la fente longitudinale (13) d'un dispositif de distribution (10) selon l'une quelconque des revendications 1 à 5 relié fonctionnellement avec au moins une tête de mélange (6) de l'appareil (1), un dépôt d'un mélange adhésif (9) sur un substrat inférieur (4) d'une manière uniforme et constante dans le temps avec des débits du mélange adhésif (9) qui peuvent varier de 100 à 2000 grammes par seconde.
